# EUROPEAN PATENT APPLICATION

(11) **EP 2 407 434 A1**
(43) Date of publication of application: **18.01.2012**
(21) Application number: 11460032.3
(22) Date of filing: 22.06.2011
(51) Int. Cl.: C02F 3/30

(54) **Method of biological waste-water treatment**

(30) Priority: 24.06.2010 PL 39160610
(71) Applicant: Slusarczyk, Jerzy Robert, 60-141 Poznan (PL)
(72) Inventor: Slusarczyk, Jerzy Robert, 60-141 Poznan (PL)
(74) Representative: Szymanski, Roman

(57) **Abstract**

In the method of the biological water-waste treatment the biological reactor is used, where the processes are conducted in the alternately joint, aerobic zone(T), anoxic zone (A) and aerobic zone {»i Raw waste-water (i) are transferred to the aerobic zone (T), located at the top of the reactor (P) and/or to the anoxic zone (A). From the last anoxic zone (A) waste-water (2) is transferred to the last aerobic zone (I) constituting an exit from the biological reactor (W). In the process of external recirculation (RZ) to the aerobic zone (T), located at the top of the reactor (P), sludge (3) from the bottom of the secondary precipitation tank (OW) is given. In the process of internal recirculation (RW) the content of the last aerobic zone (T) is divided between anoxic zone (A) and aerobic zone I. From the last aerobic zone (T) waste-water (2) are transferred with the sludge 3 to the secondary precipitation tank (OW), where the cleaned waste-water 4 (4), are separated from the sludge (3), which sediments on the bottom of the secondary precipitation tank (OW). Waste-water 4 and the excess of the sludge (3), located on the bottom of the secondary precipitation tank (OW), shall be discharged beyond the secondary precipitation tank (OW). During the process oxygen concentration in the anoxic zone (A) in the range from 0,1 to 0,5 mg 0?/L, and in the aerobic zone (T) the oxygen concentration maintains in the range from 1,7-3,0 mg 0₂/l.

## Description

The subject of the invention is a method of biological waste-water treatment, which may be applied in both municipal services and in various branches of industry and agriculture for household, industrial and derivative from them in terms of composition waste-water, containing biodegradable substances.

The problem of the known biological waste-water treatments is an increased technogenic load on the environment, due to the excess of the formation of the activated sludge, which leads to the necessity of the application of equipment for its processing, storage and disposal, the use of the reagents applied in the processing of waste-water sludge, creating the landfill sites for the created sludge. All this leads to secondary pollution and the need to use additional land. Another problem is the emission of the harmful substances, including those with unpleasant odour like hydrogen sulphide, released to the atmosphere, and thus the need to increase the size of sanitary protection zone - the distance from the plant to the housing areas. In addition, the need for continuous removal of secondary pollutants, in the form of wet sludge from primary precipitation tanks and excess of the activated sludge from the secondary precipitation tanks, does not allow the creation of a closed technological cycle of waste-water treatment, which prevents the automation of the process control as a whole and makes the work of the cleaning equipment with guaranteed quality of waste-water cleaned impossible, while reducing technogenic load on the environment,

Under the name BARDENPHO three-level biological waste-water treatment is known, which uses a biological reactor with three zones in the system: anaerobic zone, anoxic zone and aerobic zone. In this way waste-water is fed to the anaerobic zone situated at the top of the reactor, in the process of the external recirculation sludge from the secondary precipitation tank mixes with the inflow of waste-water from the first zone, and during the recirculation of the inside content of the aerobic zone the sludge is given to the anoxic zone.

Under the name BARDENPHO is also known a five-stage biological waste-water treatment, which uses a biological reactor containing five zones, within the system: anaerobic zone, anoxic zone, aerobic zone, anoxic zone and aerobic zone. In this way waste-water is fed to the anaerobic zone situated at the top of the reactor. In the process of the external recirculation, sludge from the secondary precipitation tank mixes with the inflow of waste-water from the first zone, and during the recirculation of the inside content of the third aerobic zone, the sludge is given to the second anoxic zone.

The aim of the invention is to minimize the resulting sludge, the reduction in emitted to the air of substances with an unpleasant odour and the reduction or total elimination of the chemical reagents used in waste-water treatment.

The essence of the invention of the biological waste-water treatment, in which with the help of the biological reactor the outside and inside recirculation processes are realised, is characterised by the fact that it is conducted in the alternately joint, at least aerobic zone, anoxic zone and aerobic zone, in addition to which,raw waste-water, depending on its characteristics are fed to the aerobic zone situated at the top of the reactor and/or to the anoxic zone, from the last anoxic zone, however, the waste-water are transferred to the last aerobic zone constituting an exit from the biological reactor, furthermore, in the process of outside recirculation to the aerobiczone situated at the top of the reactor, the sludge cumulated in the secondary precipitation tank is given, in the process of the inside recirculation of the content of the last aerobic zone on the other hand, sludge is divided between at least one anoxic zone or aerobic zone, apart from that, from the last aerobic zone waste-water is given with the sludge to the secondary precipitation tank, where the cleaned waste-water is separated from the sludge, which sediments to the bottom of the secondary precipitation tank. Waste-water cleaned from the sludge and the excess of sludge, located on the bottom of the secondary precipitation tank, shall be discharged beyond the secondary precipitation tank. According to another advantageous feature of the invention, raw waste-water is carried through the biological reactor, which contains more than two aerobic zones and more than one anoxic zone, while the number of anoxic zones, occurring in the biological reactor alternately, is smaller by one from the number of the aerobic zones. According to a further, advantageous feature of the invention during the process, oxygen concentration in the anoxic zone maintains in the range from 0.1 to 0.5 mg of G₂/L, and in the aerobic zone,the oxygen concentration maintains in the range from 1,7-3,0 mg 0₂/L According to the next, advantageous feature of the invention the flow of sludge recirculated from the secondary precipitation tank is adjusted in proportion to the suspended sediment layer above the bottom of the secondary precipitation tank, which is maintained in the range from 0,3 m to 0,9 m., however, no more than 25% of the active height of the secondary precipitation tank. According to another advantageous feature of the invention, the retention time of a mixture of waste-water and sludge in the first aerobic zone is not more than 2 hours, while the retention time of a mixture of waste-water and sludge in the other aerobic zones and anoxic zones is no greater than 1.5 hours.

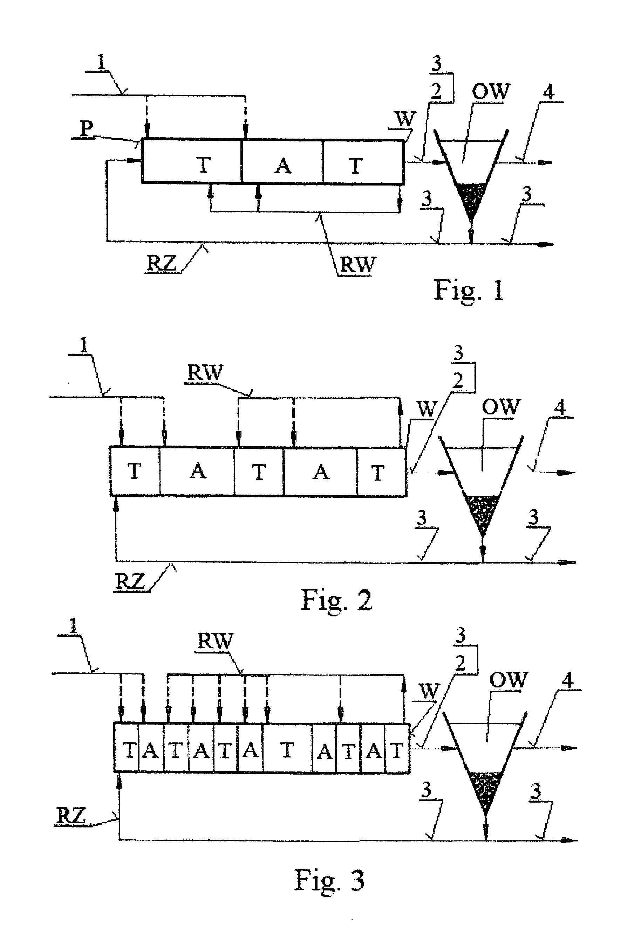

The method of biological waste-water treatment will further be explained using three examples of its implementation, illustrated in the drawings, in which Figure 1 is a scheme of the course of the method with the use of the biological reactor containing 3 zones, Figure 2 shows the scheme with the use of a biological reactor with 5 zones, and Figure 3, course of the method with the use of the biological reactor containing n zones.

### Example 1

In the method of the biological waste-water treatment, the biological reactor is used, where the processes are conducted in the alternately joint aerobic zone T, anoxic zone A and aerobic zone T. Raw waste-water 1 depending on its characteristics is fed to the aerobic zone I situated at the top of the reactor P and to the anoxic zone A. From the last anoxic zone A the waste-water 2 is transferred to the last aerobic zone I constituting an exit from the biological reactor W. In the process of the outside recirculation; K7. to the aerobic zone T, situated at the top of the reactor P, the sludge 3 cumulated at the bottom of the secondary precipitation tank OW is given. In the process of internal recirculation RW the content of the last aerobic zone T is divided between anoxic zone A and aerobic zone T. From the last aerobic zone T, waste-water 2 is carried with the sludge 3 to the secondary precipitation tankOW, where separation of the waste-water 4, cleaned from the sludge 3, sedimentation at the bottom of the secondary precipitation tank OW takes place. Waste-water 4 and the excess of the sludge 3, located at the bottom of the secondary precipitation tank OW, shall be discharged beyond the secondary precipitation tank OW. During the process oxygen concentration in the anoxic zone A maintains in the range from 0.1 to 0.5 mg 0₂/L, and in the aerobic zone T the oxygen concentration maintains in the range from 1,7-3,0 mg 0₂/l, The flow of sludge 3, recirculated from the secondary precipitation tank OW, is adjusted in proportion to the suspended sediment layer 3 above the bottom of the secondary precipitation tank OW, which is maintained in the range from 0,3rn too 0,9m, no more than 25% of the active height of the secondary precipitation tank OW. The retention time of a mixture of waste-water 2 and sludge 3 in the first aerobic zone T is not more than 2 hours, while the retention time of a mixture of waste-water 2 and sludge 3 in the other aerobic zones T and anoxic zones A is no greater than 1,5 hours.

### Example 2

In the method of the biological waste-water treatment, the biological reactor is used, where the processes are conducted in the alternately jointaerobic zone T, anoxic zone A and aerobic zone I and inanoxic zone A and aerobic zone T. Raw waste-water, depending on its characteristics, is fed to the aerobic zone T. situated on the top of the reactor P or to the anoxic zone A. From the last anoxic zone A the waste-water 2 is transferred to the last aerobic zone X constituting an exit from the biological reactor W. In the process of the outside recirculation RZ to the aerobic zone T, situated at the top of the reactor P. the sludge 3 cumulated in the secondary precipitation tank OW is given, whereas in the process of internal recirculation RW the content of the last aerobic zone I is divided between anoxic zone A or aerobic zone I. From the last aerobic zone I the waste-water 2 is given with the sludge 3 to the secondary precipitation tank OW. where the cleaned waste-water 4, is separated from the sludge 3, which sediments to the bottom of the secondary precipitation tank OW. Waste-water 4 and the excess of the sludge 3, located at the bottom of the secondary precipitation tank OV, shall be discharged beyond the secondary precipitation tank OW. During the process oxygen concentration in the anoxic zone A maintains in the range from 0,1 to 0,5 mg 0₂/L, and in the aerobic zone T the oxygen concentration maintains in the range from 1,7-3,0 mg 0₂/L The flow of sludge 3, recirculated from the secondary precipitation tank OW, is adjusted in proportion to the suspended sediment layer 3, above the bottom of the secondary precipitation tank OW. which is maintained in the range from 0,3m to 0,9m, no more than 25% of the active height of the secondary precipitation tank OW. The retention time of a mixture of waste-water 2 and sludge 3 in the first aerobic zone T is not more than 2 hours, while the retention time of a mixture of waste-water 2 and sludge 3 in the other aerobic zones T and anoxic zones A is no greater than 1,5 hours.

### Example 3

In the method of the biological waste-water treatment the biological reactor is used, where the processes are conducted in the alternately joint aerobiczones T, anoxic zones A, in addition to which the number of anoxic zones A, present in the biological reactor alternately, is smaller by one from the number of aerobic zones T. Raw waste-water I, depending on its characteristics, are transferred to the aerobic zone T, located at the top of the reactor P or to the anoxic zone A From the last anoxic zone A waste-water 2 are transferred to the last aerobic zone I constituting an exit from the biological reactor W. In the process of the external recirculation [U to the aerobic zone T, located at the top of the reactor P, the sludge 3 cumulated at the bottom of the secondary precipitation tank OW is given. In the process of internal recirculation RW the content of the last aerobic zone T is divided between anoxic zones A or aerobic zones T. From the last aerobic zone I waste-water 2 with the sludge 3 are given to the secondary precipitation tank OW. where the cleaned waste-water 4 are separated from the sludge 3, which sediments on the bottom of the secondary precipitation tank OW. Waste-water 4 and the excess of the sludge 3, located on the bottom of the secondary precipitation tank OW, shall be discharged beyond the secondary precipitation tank OW. During the process oxygen concentration in the anoxic zone A is maintained in the range from 0.1 to 0,5 mg 0₂/L, and in the aerobic zone T the oxygen concentration maintains in the range from 1 7-3,0 mg 0₂/L The flow of activated sludge 3, recirculated from the secondary precipitation tank OW. is adjusted in proportion to the suspended sediment layer 3, above the bottom of the secondary precipitation tank OW, which is maintained in the range from 0,3m to 0.9m. no more than 25% of the active height of the secondary precipitation tank OW. The retention time of a mixture of waste-water 2 and sludge 3 in the first aerobic zone I is not more than 2 hours, while the retention time of a mixture of waste-water 2 and sludge 3 in the other aerobic zones I and anoxic zones A is no greater than 1,5 hours.

Favourable effect of the invention is the reduction of the secretion of substances with an unpleasant smell into the air, by removing the sorbate organic substances from the insoluble additives. A positive effect of the invention is the elimination of the need for the technological system of the primary precipitation tank, which leads to lower investment costs associated with building cleaning facilities, and to lower operating costs. It is estimated that saving the earth's resources - in the design of the treatment devices with a capacity of 25,000 m³/day, the size of the sanitary protection zone should be subject to reduction from 450m to 20m. Reducing operational costs is possible by optimizing the air consumption, the reduction of excess sludge discharged, the possibility of discontinuing the use of expensive reagents and the reduction of the cost of energy.

## Claims

1. The method of the biological waste-water treatment, in which the biological reactor is used, where the processes of external and internal recirculation are realised, is characteristic by the way that it is realised inalternately joint , at least aerobic zone (T), anoxic zone (A) and aerobic zone (T), in addition to which, the raw waste-water (!) depending on its characteristics is transferred to the aerobic zone (T) situated at the top of the reactor (P) and/or to the anoxic zone (A), while from the last anoxic zone (A) wastewater (2) is transferred to the last aerobic zone (T) constituting an exit from the biological reactor (W), besides in the process of the external recirculation (RZ) to the aerobic zone (T), located at the top of the reactor (P), the sludge (3) cumulated in the secondary precipitation tank (OW) is given. in the process of the inside recirculation (RW) of the content of the last oxygen zone (T) on the other hand, sludge is divided between at least one anoxic zone (A) or aerobic zone (T), apart from that from the last aerobic zone (T) water-waste (2) with the sludge (3) is given to the secondary precipitation tank (OW). where the cleaned waste-water (4) is separated from the sludge(3), which sediments to the bottom of the secondary precipitation tank (OW), besides, waste-water (4) and the excess of the sludge (3), located at the bottom of the secondary precipitation tank (OW). shall be discharged beyond the secondary precipitation tank (OW).

2. The method of biological waste-water treatment according to the claim 1 characteristic in the way that, the raw waste-water (I) are carried through the biological reactor , which includes more than two aerobic zones (T) and more than one anoxic zone (A), while the number of anoxc zones (A), present in the biological reactor alternately is smaller by one, from the number of the aerobic zones (I),

3. The method of the biological waste-water treatment according to the claim 1 or 2 is characteristic in the way, that during the process oxygen concentration in the anoxic zone (A) maintains in the range from 0,1 to 0,5 mg 0₂/L, and in the aerobic zone (T) the oxygen concentration maintains in the range from 1,7-3,0 mg Ga/L

4. The method of biological waste-water treatment according to the claims, 1 or 2 or 3 is characteristic in the way that, the transfer of the sludge (3) recirculated from the secondary precipitation tank (OW) is adjusted in proportion to the suspended sediment layer (3) above the bottom of the secondary precipitation tank (OW), which is maintained in the range from 0,3m to 0.9m. no more than 25% of the active height of the secondary precipitation tank (OW).

5. The method of the biological waste-water treatment according to anyclaim from 1 to 4 is characteristic in a way that the retention time of the waste-water mixture (2) and sludge (3) in the first aerobic zone (T) is not more than 2 hours, while the retention time of a mixture of wastewater (2) and sludge (3) in other aerobic zones (T) and anoxic zones (A) is not greater than 1,5 hours.
